(19) **Europäisches Patentamt**
**European Patent Office**
**Office européen des brevets**

(11) **EP 1 527 939 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**29.07.2009 Patentblatt 2009/31**

(51) Int Cl.:
**B60K 28/16** (2006.01)    **B60K 17/356** (2006.01)

(45) Hinweis auf die Patenterteilung:
**28.06.2006 Patentblatt 2006/26**

(21) Anmeldenummer: **05002822.4**

(22) Anmeldetag: **08.11.2000**

(54) **Hydrostatischer Fahrantrieb und Verfahren zum Betreiben des hydrostatischen Fahrantriebs**

Hydrostatic drive and its control method

Transmission hydrostatique et méthode de commande d'une telle transmission

(84) Benannte Vertragsstaaten:
**DE FI FR GB IT SE**

(30) Priorität: **24.11.1999 DE 19956469**

(43) Veröffentlichungstag der Anmeldung:
**04.05.2005 Patentblatt 2005/18**

(62) Dokumentnummer(n) der früheren Anmeldung(en) nach Art. 76 EPÜ:
**04007091.4 / 1 431 098**
**00989850.3 / 1 232 067**

(73) Patentinhaber: **Bosch Rexroth AG**
**97816 Lohr am Main (DE)**

(72) Erfinder:
• **Rinck, Stefan**
**89264 Weissenhorn (DE)**

• **Girschikofsky, Günter**
**89250 Senden (DE)**

(74) Vertreter: **Körfer, Thomas et al**
**Mitscherlich & Partner**
**Patent- und Rechtsanwälte**
**Postfach 33 06 09**
**80066 München (DE)**

(56) Entgegenhaltungen:
**EP-A- 0 482 524         EP-A- 0 646 509**
**EP-B1- 0 179 066        DE-A- 3 543 073**
**DE-A- 3 610 174         DE-C2- 3 543 073**
**DE-T2- 69 208 258       DE-T2- 69 208 528**
**FR-A- 2 651 729         GB-A- 2 116 657**
**US- - 4 970 650**

• **'O+P "Fluidtechnik von A bis Z",2, überarbeitete Auflage 1995, Seiten 262-263, Stichwort "Primärverstellung"'**

**Beschreibung**

Die Erfindung betrifft ein Verfahren zum Betreiben eines hydrostatischen Fahrantriebs, wobei der hydrostatische Fahrantrieb mit einer Hydropumpe und mehreren mit der Hydropumpe hydraulisch verbundenen Hydromotoren ausgestaltet ist.

Bei dem aus DE 35 43 073 C2 hervorgehenden hydrostatischen Fahrantrieb wird ein verstellbare Hydropumpe durch eine Brennkraftmaschine angetrieben. In einem Arbeitskreislauf sind mehrere parallel zueinander angeordnete Hydromotoren vorgesehen, die jeweils unterschiedliche Fahrzeugräder antreiben. Die Hydromotoren sind ebenfalls verstellbar ausgebildet. Jedem Hydromotor bzw. jedem Fahrzeugrad ist ein Drehzahlsensor zugeordnet, welcher mit einer elektronischen Steuereinheit verbunden ist. Die Schwenkwinkel der Hydromotoren wird für alle Hydromotoren synchron geregelt.

In dem Fall, daß an einem der Fahrzeugräder aufgrund einer verminderten Bodenhaftung ein Schlupf auftritt, besteht das Problem, daß dieses Fahrzeugrad durchdreht und sich die Drehzahl des zugeordneten Hydromotors gegenüber den Drehzahlen der übrigen Hydromotoren beträchtlich erhöht. Dadurch fließt ein beträchtlicher Volumenstrom durch denjenigen Hydromotor, dessen Fahrzeuggrad dem Schlupf unterworfen ist, wodurch der den übrigen Hydromotoren, über welche der Antrieb erfolgt, zur Verfügung stehende Volumenstrom verringert wird. Dadurch wird der Wirkungsgrad des hydrostatischen Antriebs erheblich vermindert.

Um dies zu vermeiden, wird in der DE 35 43 073 C2 vorgeschlagen, die Drehzahlen der einzelnen Fahrzeugräder bzw. Hydromotoren in der elektronischen Steuereinheit fortwährend miteinander zu vergleichen. Tritt eine deutliche Abweichung der Drehzahl eines der Fahrzeugräder gegenüber den Drehzahl der übrigen Fahrzeugräder auf, so deutet dies auf einen Schlupf an diesem Fahrzeugrad hin. Die hydraulische Schwenkwinkelregelung des betroffenen Fahrzeugrades wird durch ein elektromagnetisch betätigbares Steuerventil so übersteuert, daß das Schluckvolumen des dem betroffenen Fahrzeugrad zugeordneten Hydromotors durch Zurückschwenken verringert wird.

Nachteilig bei dem in der DE 35 43 073 C2 vorgeschlagenen Zurückschwenken desjenigen Hydromotors, dessen Fahrzeugrad einem Schlupf unterworfen ist, ist jedoch, daß durch das Zurückschwenken des Hydromotors zwar der durch diesen Hydromotor strömende Volumenstrom verringert wird und somit den anderen Hydromotoren zur Verfügung steht, mit dem Zurückschwenken des Hydromotors bei gleichbleibendem Schwenkwinkel der Hydropumpe und der übrigen Hydromotoren jedoch gleichzeitig eine Beschleunigung des zugehörigen Fahrzeugrades und somit eine erneute Drehzahlzunahme verbunden sein kann, insbesondere, wenn die Drehbewegung des Fahrzeugrades keiner bodenhaftungsbedingten Reibung unterworfen ist..Diese Maßnahme schließt deshalb die Gefahr eines Überdrehens des zurückgeschwenkten Hydromotors nicht aus.

Aus der DE-AS 21 35 279 ist als solches ein hydrostatischer Fahrantrieb mit einer verstellbaren Hydropumpe und einem einzigen verstellbaren Hydromotor in Kombination mit einer Fahrzeugbremse bekannt. Die Fahrzeugbremse ist mittels eines Bremspedals pneumatisch betätigbar. Das pneumatische Bremsventil ist mit der hydraulischen Verstelleinrichtung verbunden, so daß das hydrostatische Getriebe bei einer Betätigung der Fahrzeugbremse zurückgestellt wird, um eine gegensinnige Kraftwirkung zwischen dem Antrieb über das hydrostatische Getriebe und der Fahrzeugbremse zu vermeiden. Ferner ist an der die Brennkraftmaschine mit der Hydropumpe verbindenden Welle ein Drehzahlsensor angeordnet, welcher die Fahrzeugbremse betätigt, wenn die Drehzahl der Bremskraftmaschine die maximal zulässige Höchstdrehzahl erreicht. Durch Abbremsen des Fahrzeuges wird ein Überschreiten der Höchstdrehzahl und somit ein Überdrehen der Brennkraftmaschine vermieden. Aus dieser Druckschrift ergibt sich jedoch keinerlei Hinweis, die Fahrzeugbremse in Verbindung mit einer Antischlupf-Regelung an einem hydrostatischen Fahrantrieb zu verwenden.

Aus den Dokumenten EP 0 646 509 A1, EP 0 179 066 B1 und US 4 970 650 ist jeweils ein Fahrzeug ohne hydrostatischen Fahrantrieb bekannt, bei welchem der Schlupf eines der Räder basierend auf einem Lenk- oder Knickwinkel das Fahrzeugs erkannt wird. Für die Ermittlung des Schlupfes eines Rades werden die Anzahl der Radumdrehungen und/oder Achsenumdrehungen miteinander verglichen.

Aus der FR 2 651 729, die als nächstliegender Stand der Technik angesehen wird, ist ein Gerät bekannt, das mit zumindest vier Rädern ausgestattet ist, wobei die Räder von einem mit einer Bremse versehenen Antrieb angetrieben werden und wobei jedes Rad einen Geschwindigkeitssensor aufweist, der mit einem Rechner bzw. mit einem Mikroprozessor verbunden ist, wobei der Rechner bzw. der Mikroprozessor zu jedem Zeitpunkt Daten bezüglich der Geschwindigkeit empfängt. Dabei werden die Räder erfasst, die durchdrehen, wobei die Elektronik mit dem speziellen Einsteckmodul dieses berechnete, basierend auf dem unter Druck stehenden Fluid, der diese Räder speist, und dahingehend auf das durchdrehenden Rad bzw. die durchdrehenden Räder so einwirkt, daß das Durchdrehen verhindert wird, dadurch daß direkt die dem Rad zugeordnete Bremse betätigt wird.

Der Erfindung liegt die Aufgabe zugrunde, einen hydrostatischen Fahrantrieb zu schaffen, bei welchem eine Verminderung des Wirkungsgrades beim Auftreten eines Schlupfes an einem der unterschiedlichen Hydromotoren zugeordneten Antriebssträngen verhindert wird, ohne dass die Gefahr des Überdrehens der Hydromotoren besteht, und ein Verfahren zum Betreiben des erfindungsgemässen hydrostatischen Fahrantriebs anzugeben.

Die Aufgabe wird gelöst durch ein Verfahren zum Betreiben eines hydrostatischen Fahrantriebs mit den Merkmalen des Anspruchs 1.

Die Ansprüche 2 bis 4 beinhalten vorteilhafte Weiterbildungen des erfindungsgemäßen Verfahrens zum Betreiben eines hydrostatischen Fahrantriebs.

Es ist vorteilhaft, die Steuereinheit als elektronische Steuereinheit auszubilden und die Bremseinrichtung hydraulisch über ein elektronisch ansteuerbares Steuerventil zu betätigen. Durch die elektronische Steuereinheit wird eine kurze Ansprechzeit ermöglicht. Die Steuereinheit kann vorteilhaft mit einem weiteren Drehzahlsensor zum Ermitteln der Drehzahl der Hydropumpe, einem Geschwindigkeitssensor zum Ermitteln der Fahrzeug-Geschwindigkeit eines von dem Fahrantrieb angetriebenen Fahrzeugs und/oder einem Lenkwinkelgeber zum Erfassen des Lenkwinkels eines von dem Fahrantrieb angetriebenen Fahrzeugs verbunden sein. Diese zusätzlichen Sensoren dienen zur Ermittlung des variablen Grenzwerts der Drehzahlen für die einzelnen Hydromotoren.

Der Grenzwert für die Drehzahlen der Hydromotoren wird erfindungsgemäß durch eine arithmetische Berechnung aus den Drehzahlen sämtlicher Hydromotoren ermittelt. Der Grenzwert kann beispielsweise aus dem arithmetischen Mittelwert der Drehzahlen sämtlicher Hydromotoren berechnet werden. Zusätzlich kann der Grenzwert auch auf der Grundlage der erfaßten Fahrzeug-Geschwindigkeit des angetriebenen Fahrzeugs ermittelt werden. Eine weitere zusätzliche Möglichkeit zur Bestimmung des Grenzwerts besteht darin, den von der Hydropumpe erzeugten Volumenstrom mit dem Volumenstrom durch den jeweiligen Hydromotor zu vergleichen. Sind beispielsweise vier Hydromotoren in dem hydrostatischen Fahrantrieb vorgesehen und beträgt der Volumenstrom durch einen der Hydromotoren wesentlich mehr als ein Viertel des von der Hydropumpe erzeugten Volumenstroms, so deutet dies auf einen Schlupf an dem entsprechenden Antriebsstrang hin.

Bei einer Betätigung zumindest einer der Bremseinrichtungen ist es vorteilhaft, wenn der Schwenkwinkel der Hydropumpe zurückgeschwenkt wird, um die Antriebsleistung zu verringern, und/oder der Schwenkwinkel des der betätigten Bremseinrichtung zugeordneten Hydromotors zurückgeschwenkt wird, um das Abtriebsmoment dieses Hydromotors zu verringern. Dadurch werden eine Überhitzung und ein übermäßiger Verschleiß der betätigten Bremseinrichtung vermieden.

Erfindungsgemäß wird über einen Lenkwinkelgeber der Lenkwinkel des von dem Fahrantrieb angetriebenen Fahrzeugs erfaßt wird und die sich aufgrund der Differentialwirkung ergebende Drehzahldifferenz zweier sich beispielsweise an einer gemeinsamen Fahrzeugachse gegenüberliegender Hydromotoren bei der Bemessung des Grenzwerts für das Auslösen der Bremseinrichtung berücksichtigt wird.

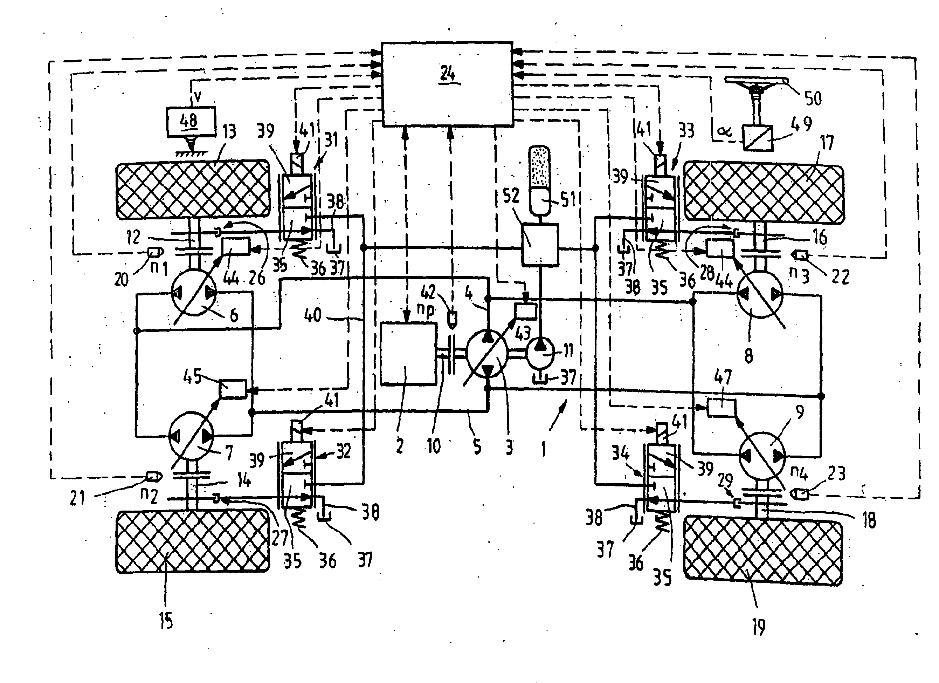

Die Erfindung wird nachfolgend unter Bezugnahme auf die Zeichnung näher beschrieben. Die einzige Figur der Zeichnung zeigt ein erfindungsgemäßes Ausführungsbeispiel eines hydrostatischen Fahrantriebs.

Der allgemein mit dem Bezugszeichen 1 bezeichnete hydrostatische Fahrantrieb umfaßt eine von einer Brennkraftmaschine 2 angetriebene Hydropumpe 3, die über einen aus einer ersten Arbeitsleitung 4 und einer zweiten Arbeitsleitung 5 bestehenden Arbeitskreislauf mit zumindest zwei Hydromotoren, im Ausführungsbeispiel mit vier Hydromotoren, nämlich dem ersten Hydromotor 6, dem zweiten Hydromotor 7, dem dritten Hydromotor 8 und dem vierten Hydromotor 9, hydraulisch verbunden ist. Die Hydropumpe 3 ist über eine Antriebswelle 10 mit der Brennkraftmaschine 2 verbunden. Auf der Antriebswelle 10 sitzt im Ausführungsbeispiel 10 ferner eine Hilfspumpe 11. Die Hydromotoren 6 - 9 sind in dem Arbeitskreislauf 4, 5 parallel zueinander angeordnet, wobei jeweils einer der Anschlüsse der Hydromotoren 6 - 9 über die erste Arbeitsleitung 4 mit einem Anschluß der Hydropumpe 3 verbunden ist und der jeweils andere Anschluß der Hydromotoren 6 bis 9 über die zweite Arbeitsleitung 5 mit dem anderen Anschluß der Hydropumpe 3 verbunden ist.

Der erste Hydromotor 6 treibt über eine erste Abtriebswelle 12 ein erstes Fahrzeugrad 13 an, der zweite Hydromotor 7 treibt über eine zweite Abtriebswelle 14 ein zweites Fahrzeugrad 15 an, der dritte Hydromotor 8 treibt über eine dritte Abtriebswelle 16 ein drittes Fahrzeugrad 17 an und der vierte Hydromotor 9 treibt über eine vierte Abtriebswelle 18 ein viertes Fahrzeugrad 19 an. Die Drehzahl $n_1$ des ersten Hydromotors 6 wird durch einen ersten Drehzahlsensor 20, die Drehzahl $n_2$ des zweiten Hydromotors 7 wird durch einen zweiten Drehzahlsensor 21, die Drehzahl $n_3$ des dritten Hydromotor 8 wird durch einen dritten Drehzahlsensor 22 und die Drehzahl $n_4$ des vierten Hydromotors 9 wird durch einen vierten Drehzahlsensor 23 erfaßt. Die im Ausführungsbeispiel elektrischen Drehzahlsignale der Drehzahlsensoren 20 - 23 werden einer im Ausführungsbeispiel elektronischer Steuereinheit 24 zugeführt, die beispielsweise als Mikrocontroller oder als Mikroprozessor ausgebildet sein kann.

Jedem Hydromotor 6 - 9 jeweils ist eine Bremseinrichtung 26 - 29 zugeordnet, d. h. dem ersten Hydromotor 6 ist eine erste Bremseinrichtung 26, dem zweiten Hydromotor 7 ist eine zweite Bremseinrichtung 27, dem dritten Hydromotor 8 ist eine dritte Bremseinrichtung 28 und dem vierten Hydromotor 9 ist eine vierte Bremseinrichtung 29 zugeordnet, welche bei einer Betätigung die entsprechende Abtriebswelle 12, 14, 16 bzw. 18 abbremst. Im dargestellten bevorzugten Ausführungsbeispiel sind die Bremseinrichtungen 26 - 29 jeweils hydraulisch betätigbar und jeweils über ein Steuerventil 31, 32, 33 bzw. 34 ansteuerbar. Die Steuerventile 31 bis 34 sind jeweils als 3/2-Wegeventile ausgebildet. In einer ersten Ventilstellung 35 sind die Bremseinrichtungen 26 - 29 jeweils mit einer zum Hydraulikfluid-Tank 37 führenden Tankleitung 38 verbunden. In einer zweiten Ventilstellung 39 hingegen, sind die Bremseinrichtungen 26 - 29 mit einer Druckleitung 40 verbunden, so daß die zugeordnete Bremseinrichtung 26, 27, 28 bzw. 29 in dieser Ventilstellung mit Druck beaufschlagt wird und somit eine Bremswirkung auf die zugeordnete Abtriebswelle 12, 14, 16 bzw. 18 ausübt. Die Steuerventile 31 - 34 sind jeweils durch einen elektrisch ansteuerbaren Steuergeber 41, beispielsweise einen Elektromagneten, ansteuerbar. Die Steuerventile 31 - 34 sind vorzugsweise als Proportionalventile ausgebildet, d. h. die Steuerventile 31 - 34 können proportional zum erregenden elektrischen Strom zwischen den Ventilstellungen 35 und 39 jede Zwischenstellung einnehmen. Eine Rückstellfeder 36 bewirkt, daß die Steuerventile 31 - 34 jeweils die erste Ventilstellung 35 als Grundstellung einnehmen, wenn sie nicht durch den Steuergeber 41 beaufschlagt sind. Die elektrisch ansteuerbaren Steuergeber 41 der Steuerventile 31 - 34 stehen mit der elektronischen Steuereinheit 24 in Verbindung und sind von dieser elektrisch ansteuerbar.

An der Antriebswelle 10 ist im dargestellten Ausführungsbeispiel ferner ein fünfter Drehzahlsensor 42 zum Erfassen der Drehzahl $n_p$ der Hydropumpe 3 vorgesehen. Die Hydropumpe 3 und der Hydromotoren 6 - 9 sind in dem bevorzugten Ausführungsbeispiel verschwenkbar, d. h. das Fördervolumen pro Umdrehung der Hydropumpe 3 und das Schluckvolumen pro Umdrehung der Hydromotoren 6 - 9 ist veränderbar. Eine Verstellvorrichtung 43 der Hydropumpe 3 sowie eine Verstellvorrichtung 44 des ersten Hydromotors 6, eine Verstellvorrichtung 45 des zweiten Hydromotors 7, eine Verstellvorrichtung 46 des dritten Hydromotors 8 und eine Verstellvorrichtung 47 des vierten Hydromotors 9 sind durch die elektronische Steuereinheit 24 ansteuerbar.

Die elektronische Steuereinheit 24 ist vorzugsweise ferner mit einem Geschwindigkeitssensor 48, der die Fahrzeug-Geschwindigkeit v des von dem hydrostatischen Fahrantrieb 1 angetriebenen Fahrzeugs über Grund erfaßt, sowie mit einem Lenkwinkelgeber 49, der den beispielsweise durch ein Lenkrad 50 vorgegebenen Lenkwinkel $\alpha$ des von dem Fahrantrieb 1 angetriebenen Fahrzeugs erfaßt, verbunden.

Die Druckleitung 40 wird aus einem Hydraulikfluid-Speicher 51 mit Hydraulikfluid versorgt, das die Hilfspumpe 11 aus dem Hydraulikfluid-Tank 37 ansaugt. Der Hydraulikfluid-Speicher 51 wird über ein Speicherladeventil 52 geladen.

Solange an den Antriebsrädern 13, 15, 17 und 19 keinerlei Schlupf auftritt und eine gute Bodenhaftung besteht, erfolgt der Antrieb als Allradantrieb über sämtliche Hydromotoren 6 - 9. Die Schwenkwinkelverstellung der Hydromotoren 6 - 9 wird dabei durch die elektronische Steuereinheit 24, abgesehen von durch den Differentialausgleich hervorgerufene Korrekturen bei Kurvenfahrten, synchron vorgenommen. Mit zunehmender Fahrzeug-Geschwindigkeit wird dabei der Schwenkwinkel der Hydropumpe 3 weiter ausgeschwenkt und dann der Schwenkwinkel der Hydromotoren 6 - 9 mit weiter zunehmender Fahrzeug-Geschwindigkeit zurückgeschwenkt.

Tritt jedoch an einem der Fahrzeugräder 13, 15, 17, 19, beispielsweise an dem Fahrzeugrad 13, ein Schlupf auf, so hätte dies ohne die erfindungsgemäße Maßnahme zur Folge, daß sich die Drehzahl $n_1$ an dem Fahrzeugrad 13 aufgrund der verminderten Bodenhaftung drastisch erhöhen würde und somit der den Hydromotor 6 durchströmende Volumenstrom zunehmen würde. Bei von der Hydropumpe 3 erzeugtem konstanten Volumenstrom folgt daraus, daß der Volumenstrom für die für den Antrieb noch zur Verfügung stehenden übrigen Hydromotoren 7, 8 und 9 drastisch abnehmen würde und sich somit eine Verminderung des Wirkungsgrades des hydrostatischen Fahrantriebs 1 ergeben würde.

Die Bremseinrichtung 26 wird jedoch des Hydromotors 6, dessen Fahrzeugrad 13 dem Schlupf unterworfen ist, betätigt, so daß die Drehzahl $n_1$ des Hydromotors 6 begrenzt wird. Die Bremswirkung ist idealerweise so bemessen, daß das Fahrzeugrad 13 an dem schlecht haftenden Untergrund antriebslos mitdrehen kann. Die Drehzahl $n_1$ des Hydromotors 6 unterscheidet sich dann nicht von den Drehzahlen $n_2$, $n_3$, $n_4$ der übrigen Hydromotoren 7 - 9, so daß der Volumenstrom durch die übrigen Hydromotoren 7 - 9 durch den Schlupf an dem Fahrzeugrad 13 unbeeinträchtigt bleibt. Zusätzlich kann der Hydromotor 6 über die Verstellvorrichtung 44 auf ein geringeres Schluckvolumen pro Umdrehung zurückgeschwenkt werden, so daß der Volumenstrom durch den Hydromotor 6 abnimmt oder sogar zu Null wird und somit der von der Hydropumpe 3 erzeugte Volumenstrom nahezu vollständig für den Antrieb über die Hydromotoren 7, 8 und 9 zur Verfügung steht.

Um eine Überhitzung bzw. einen übermäßigen Verschleiß der Bremseinrichtungen 26 - 29 zu vermeiden, ist es vorteilhaft, die Antriebsleistung des hydrostatischen Fahrantriebs 1 im Falle einer Betätigung zumindest einer der Bremseinrichtungen 26 - 29 zu vermindern. Dies kann entweder direkt durch Vermindern des der Brennkraftmaschine 2 zugeführten Brennstoffs und/oder Drosseln der Ansaugluft erfolgen oder durch ein Zurückschwenken der Hydropumpe 3 mittels der Verstellvorrichtung 43.

Für die Feststellung, ob an einem der Fahrzeugräder 13, 15, 17 oder 19 ein Schlupf auftritt, stehen mehrere Möglichkeiten zur Verfügung, die auch in Kombination zum Einsatz kommen können und nachfolgend beschrieben werden.

Die Drehzahl $n_1$, $n_2$, $n_3$ und $n_4$ sämtlicher Fahrzeugräder 13, 15, 17 und 19 wird kontinuierlich durch die Drehzahlsensoren 20, 21, 22 und 23 gemessen. Das Meßsignal wird der elektronischen Steuereinheit 24 zugeführt. Durch Vergleich der Drehzahlen $n_1$, $n_2$, $n_3$, und $n_4$ läßt sich feststellen, ob eine der Drehzahlen $n_1$, $n_2$, $n_3$ oder $n_4$ wesentlich größer ist, als die Drehzahlen der übrigen Fahrzeugräder 13, 15, 17, 19. Beispielsweise kann ein Grenzwert $n_g$ für die Drehzahlen dadurch festgelegt werden, daß das arithmetische Mittel aus sämtlichen Drehzahlen $n_1$, $n_2$, $n_3$ und $n_4$ berechnet wird und hierzu eine Toleranz-Konstante C addiert wird. Der Grenzwert $n_g$ ergibt sich dann im Ausführungsbeispiel wie folgt:

$$n_g = (n_1 + n_2 + n_3 + n_4) / 4 + C \qquad (1)$$

Überschreitet eine der Drehzahlen $n_1$, $n_2$, $n_3$ oder $n_4$ diesen Grenzwert $n_g$, so deutet dies auf einen Schlupf an dem betreffenden Fahrzeugrad 13, 15, 17 bzw. 19 hin, so daß eine Betätigung der entsprechenden Bremseinrichtung 26, 27, 28 oder 29 erfolgt. Unterschreitet die Drehzahl an dem von dem Schlupf betroffene Fahrzeugrad wieder den Grenzwert $n_g$, so wird die entsprechende Bremseinrichtung 26, 27, 28 oder 29 wieder freigegeben.

Eine zusätzliche Möglichkeit zur Bestimmung des Grenzwerts $n_g$ für die Drehzahlen $n_1$, $n_2$, $n_3$ und $n_4$ besteht darin, mittels des Geschwindigkeitssensors 48 die Fahrzeug-Geschwindigkeit v des von dem hydrostatischen Fahrantrieb 1 angetriebenen Fahrzeugs über Grund zu ermitteln. Der Grenzwert $n_g$ ergibt sich dann durch Division der Fahrzeug-Geschwindigkeit v durch den Umfang U des jeweiligen Fahrzeuggrads 13, 15, 17 bzw. 19 und Addition der Toleranz-Konstante C, d. h. durch die Formel:

$$n_g = v/U + C \qquad (2)$$

Eine weitere zusätzliche Möglichkeit zur Bestimmung des Grenzwerts $n_g$ besteht in einem Vergleich des von der Hydropumpe 3 erzeugten Volumenstroms mit dem die Hydromotoren 6 - 9 durchströmenden Volumenstrom. Sofern die Hydromotoren 6 bis 9 synchron verschwenkt werden, gilt bei im Ausführungsbeispiel vier Hydromotoren ohne das Auftreten eines Schlupfes die Beziehung:

$$n_p \cdot V_p = 4 \cdot n_m \cdot V_m .$$

Darin bedeuten: $n_p$ die mit dem Drehzahlsensor 42 erfaßte Drehzahl der Hydropumpe 3, $V_p$ das von der Hydropumpe 3 pro Umdrehung erzeugte Fördervolumen, $n_m$ die Soll-Drehzahl ohne Schlupf der Hydromotoren 6 - 9 und $V_m$ das Schluckvolumen der Hydromotoren 6 - 9 pro Umdrehung. Das Fördervolumen pro Umdrehung der Hydropumpe 3 ist durch die Verstellvorrichtung 43 festgelegt, während das Schluckvolumen pro Umdrehung der Hydromotoren 6 - 9 durch die synchron angesteuerten Verstellvorrichtungen 44 - 47 festgelegt ist. Für den Grenzwert $n_g$ der Drehzahl der Hydromotoren 6 - 9, welcher zum Auslösen der zugehörigen Bremseinrichtung 26 - 29 führt, gilt deshalb:

$$n_g = (n_p \cdot V_p) / (4 \cdot V_m) + C \qquad (3)$$

Dabei bedeutet C wiederum eine Toleranz-Konstante, die ein geringfügiges Übersteigen der gemessenen Ist-Drehzahl $n_1$, $n_2$, $n_3$ bzw. $n_4$ über die wie vorstehend berechnete Soll-Drehzahl $n_m$ ermöglicht.

Da sich bei Kurvenfahrten aufgrund der Differentialwirkung eine Abweichung der Drehzahlen $n_1$ und $n_2$ bzw. $n_3$ und $n_4$ der sich an einer Achse gegenüberliegenden Fahrzeugräder 13 und 15 bzw. 17 und 19 ergibt, ist es sinnvoll, die Toleranz-Konstante C als Funktion des Lenkwinkels $\alpha$ zu bemessen. Der Lenkwinkel $\alpha$ des Fahrzeugs kann durch den Lenkwinkelgeber 49 erfaßt werden. Die zu dem erfaßten Lenkwinkel $\alpha$ gehörige Toleranz-Konstante C kann in einem Speicher der elektronischen Steuereinheit 24 in Form einer Tabelle gespeichert sein und entsprechend abgerufen werden.

Wenn der Grenzwert $n_g$ für die Drehzahlen mit mehreren Methoden bestimmt wird, kann beispielsweise ein Mittelwert aus dem mit den verschiedenen Methoden ermittelten Grenzwerten $n_g$ berechnet werden oder es kann der jeweils kleinste Grenzwert $n_g$ zum Auslösen der Bremseinrichtungen 26 - 29 herangezogen werden.

Die Erfindung ist nicht auf das dargestellte Ausführungsbeispiel beschränkt. Beispielsweise kann der Antrieb auch über weniger oder mehr als vier Fahrzeugräder erfolgen. Anstatt über Fahrzeugräder kann der Antrieb auch über Antriebsketten erfolgen. Der Antrieb kann auch über mehrere Hydropumpen erfolgen, wobei jeder Hydropumpe zumindest zwei Hydromotoren zugeordnet sind. Als Bremseinrichtung kann entweder für jeden Hydromotor 6 - 9 eine separate Bremse angebracht werden oder es kann eine bestehende Fahrzeugbremse so modifiziert werden, daß die Ansteuerung der Fahrzeugbremse für jedes Fahrzeugrad separat und unabhängig ermöglicht wird. Der Druck in der Druckleitung 40 zum Betätigen der Bremseinrichtungen 26 - 29 kann auch aus dem Arbeitsdruck in den Arbeitsleitungen 4 und 5 abgeleitet werden. Dazu kann die Druckleitung 40 über ein Druckreduzierventil und ein Wechselventil mit der jeweils druckführenden Arbeitsleitung 4 bzw. 5 verbunden sein. Der erfindungsgemäße Fahrantrieb 1 kann ferner, insbesondere bei landwirtschaftlichen Maschinen, als Lenkbrems-System eingesetzt werden.

**Patentansprüche**

1. Verfahren zum Betreiben eines hydrostatischen Fahrantriebs (1) mit zumindest einer Hydropumpe (3), einem Lenkwinkelgeber (49) zur Erfassung eines Lenkwinkels ($\alpha$) eines vom Fahrantrieb (1) angetriebenen Fahrzeugs und mehreren mit der Hydropumpe (3) hydraulisch verbundenen Hydromotoren (6 - 9), wobei jedem Hydromotor (6; 7; 8; 9) jeweils ein Drehzahlsensor (20; 21; 22; 23) und jeweils eine Bremseinrichtung (26; 27; 28; 29) zugeordnet ist, mit folgenden Verfahrensschritten:

   - Erfassen der Drehzahlen ($n_1$; $n_2$; $n_3$; $n_4$) sämtlicher Hydromotoren (6 - 9) mit den den Hydromotoren (6 - 9) zugeordneten Drehzahlsensoren (20 - 23) und des Lenkwinkels ($\alpha$) eines vom Fahrantrieb (1) angetriebenen Fahrzeugs,
   - Feststellen, ob eine der Drehzahlen ($n_1$; $n_2$ ; $n_3$; $n_4$) der Hydromotoren (6 - 9) einen vorgegebenen Grenzwert ($n_g$) überschreitet, wobei eine sich bei Kurvenfahrten ergebende Drehzahldifferenz der Hydromotoren (6 - 9) in Abhängigkeit von dem erfaßten Lenkwinkel ($\alpha$) berücksichtigt wird und wobei der Grenzwert ($n_g$) durch eine arithmetische Berechnung aus den Drehzahlen ($n_1$; $n_2$; $n_3$; $n_4$) sämtlicher Hydromotoren (6 - 9) ermittelt wird, und
   - Abbremsen desjenigen Hydromotors (6; 7; 8; 9), dessen Drehzahl ($n_1$; $n_2$; $n_3$; $n_4$) den vorgegebenen Grenzwert ($n_g$) überschreitet, durch Betätigen der diesem Hydromotor (6; 7; 8; 9) zugeordneten Bremseinrichtung (26; 27; 28; 29).

2. Verfahren nach Anspruch 1,
   **dadurch gekennzeichnet,**
   **daß** die Bremseinrichtung (26; 27; 28; 29) wieder freigegeben wird, sobald die Drehzahl ($n_1$; $n_2$; $n_2$; $n_4$) des zugeordneten Hydromotors (6; 7; 8; 9) den vorgegebene Grenzwert ($n_g$) unterschreitet.

3. Verfahren nach Anspruch 1,
   **dadurch gekennzeichnet,**
   **daß** der Grenzwert der arithmetische Mittelwert der Drehzahlen ($n_1$; $n_2$; $n_3$; $n_4$) sämtlicher Hydromotoren (6 - 9) zuzüglich einer Toleranz-Konstante (C) ist.

4. Verfahren nach einem der Ansprüche 1 bis 3,
   **dadurch gekennzeichnet,**
   **daß** der Fahrantrieb (1) einen Geschwindigkeitssensor (48) zum Erfassen der Fahrzeug-Geschwindigkeit (v) eines von dem Fahrantrieb (1) angetriebenen Fahrzeugs aufweist und
   **daß** der Grenzwert ($n_g$) auf der Grundlage der erfaßten Fahrzeug-Geschwindigkeit (v) ermittelt wird.

**Claims**

1. Method for operating a hydrostatic drive (1) with at least one hydraulic pump (3), a steering angle transmitter (49) for detecting a steering angle ($\alpha$) of a vehicle propelled by a drive (1) and a plurality of hydraulic motors (6 - 9) hydraulically linked with the hydraulic pump (3), wherein one speed sensor (20; 21; 22; 23) and one brake device (26; 27; 28; 29) each is allocated to a respective hydraulic motor (6; 7; 8; 9) with the following stages:

   - Detection of the speeds ($n_1$; $n_2$; $n_3$; $n_4$) of all the hydraulic motors (6 - 9) with the speed sensors (20 - 23) allocated to the hydraulic motors (6 - 9), and the steering angle ($\alpha$) of a vehicle driven by the drive (1),
   - Determination whether one of the speeds ($n_1$; $n_2$; $n_3$; $n_4$) of the hydraulic motors (6 - 9) exceeds a predetermined threshold value ($n_g$), wherein a speed difference of the hydraulic motors (6 - 9) resulting when rounding bends is considered as a function of the detected steering angle ($\alpha$), and wherein the threshold value (ng) is calculated by arithmetical calculation of the speeds ($n_1$; $n_2$; $n_3$; $n_4$) of all the hydraulic motors (6 - 9), and
   - Braking of that hydraulic motor (6; 7; 8; 9), the speed of which ($n_1$; $n_2$; $n_3$; $n_4$) exceeds the predetermined threshold value (ng) through operation of the brake device (26; 27; 28; 29) allocated to this hydraulic motor (6; 7; 8; 9).

**2.** Method according to Claim 1, **characterised in that** the brake device (26; 27; 28; 29) is again released as soon as the speed ($n_1$; $n_2$; $n_3$; $n_4$) of the allocated hydraulic motor (6; 7; 8; 9) falls below the predetermined threshold value ($n_g$).

**3.** Method according to Claim 1, **characterised in that** the threshold value is the arithmetical average of the speeds ($n_1$; $n_2$; $n_3$; $n_4$) of all the hydraulic motors (6 - 9) plus a tolerance-constant (C).

**4.** Method according to any one of Claims 1 to 3, **characterised in that** the drive (1) comprises a speed sensor (48) to detect the road speed (v) of a vehicle propelled by the drive (1), and **in that** the threshold value (ng) is calculated on the basis of the detected vehicle road speed (v).

**Revendications**

**1.** Procédé de conduite d'une transmission hydrostatique (1) avec au moins une pompe hydraulique (3), un résolveur d'angle de direction (49) pour saisir un angle de direction ($\alpha$) d'un véhicule entraîné par la transmission (1) et plusieurs moteurs hydrauliques (6 - 9) qui sont en liaison hydraulique avec la pompe hydraulique (3), alors qu'à chaque moteur hydraulique (6 ; 7 ; 8 ; 9) est attribué respectivement un capteur de régime de rotation (20 ; 21 ; 22 ; 23) et respectivement un dispositif de freinage (26 ; 27 ; 28 ; 29), le procédé comprenant les étapes suivantes :

- saisie des régimes de rotation ($n_1$ ; $n_2$ ; $n_3$ ; $n_4$) de tous les moteurs hydrauliques (6 - 9) au moyen des capteurs de régime de rotation (20 - 23) attribués aux moteurs hydrauliques (6 - 9) ainsi que de l'angle de direction ($\alpha$) d'un véhicule entraîné par la transmission (1),
- constatation du fait que l'un des régimes de rotation ($n_1$ ; $n_2$ ; $n_3$ ; $n_4$) des moteurs hydrauliques (6 - 9) dépasse ou non une valeur limite prédéterminée (ng), une différence de régime de rotation des moteurs hydrauliques (6 - 9) qui se produit lors du déplacement en virage en fonction de l'angle de direction ($\alpha$) saisi étant prise en compte et la valeur limite (ng) étant déterminée par un calcul arithmétique à partir des régimes de rotation ($n_1$; $n_2$ ; $n_3$ ; $n_4$) de tous les moteurs hydrauliques (6 - 9), et
- freinage du moteur hydraulique (6 ; 7 ; 8 ; 9) dont le régime de rotation ($n_1$ ; $n_2$ ; $n_3$ ; $n_4$) dépasse la valeur limite prédéterminée (ng) par l'actionnement du dispositif de freinage (26; 27 ; 28; 29) attribué à ce moteur hydraulique (6 ; 7 ; 8 ; 9).

**2.** Procédé selon la revendication 1,
**caractérisé en ce que**
le dispositif de freinage (26 ; 27 ; 28 ; 29) est à nouveau relâché dès que le régime de rotation ($n_1$ ; $n_2$ ; $n_3$ ; $n_4$) du moteur hydraulique (6 ; 7 ; 8 ; 9) associé passe au-dessous de la valeur limite prédéterminée (ng).

**3.** Procédé selon la revendication 1,
**caractérisé en ce que**
la valeur limite est la valeur moyenne arithmétique des régimes de rotation ($n_1$; $n_2$ ; $n_3$ ; $n_4$) de tous les moteurs hydrauliques (6 - 9) majorée d'une constante de tolérance (C).

**4.** Procédé selon l'une quelconque des revendications 1 à 3,
**caractérisé en ce que**
la transmission (1) comprend un capteur de vitesse (48) pour la saisie de la vitesse (v) d'un véhicule entraîné par la transmission (1) et **en ce que** la valeur limite (ng) est déterminée sur la base de la vitesse (v) du véhicule qui a été saisie.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3543073 C2
- DE 2135279 B
- EP 0646509 A1
- EP 0179066 B1
- US 4970650 A
- FR 2651729